(19) Europäisches Patentamt
European Patent Office
Office européen des brevets

(11) Veröffentlichungsnummer : **0 439 057 B1**

# (12) EUROPÄISCHE PATENTSCHRIFT

(45) Veröffentlichungstag der Patentschrift :
**27.04.94 Patentblatt 94/17**

(51) Int. Cl.[5] : **C09B 43/42,** C09B 67/22, D06P 1/18

(21) Anmeldenummer : **91100503.1**

(22) Anmeldetag : **17.01.91**

## (54) Monoazofarbstoffe, ihre Herstellung und Verwendung.

(30) Priorität : **22.01.90 DE 4001671**

(43) Veröffentlichungstag der Anmeldung :
**31.07.91 Patentblatt 91/31**

(45) Bekanntmachung des Hinweises auf die Patenterteilung :
**27.04.94 Patentblatt 94/17**

(84) Benannte Vertragsstaaten :
**CH DE FR GB IT LI**

(56) Entgegenhaltungen :
**DE-A- 2 715 034**
**DE-A- 2 850 994**
**GB-A- 1 479 644**

(73) Patentinhaber : **CASSELLA Aktiengesellschaft**
**Hanauer Landstrasse 526**
**D-60386 Frankfurt (DE)**

(72) Erfinder : **Bühler, Ulrich, Dr.**
**Kastanienweg 8**
**W-8755 Alzenau (DE)**
Erfinder : **Boos, Margereta**
**Am See 6**
**W-6234 Hattersheim (DE)**
Erfinder : **Kühn, Reinhard**
**Heinrich-Bleicher-Strasse 39**
**W-6000 Frankfurt am Main 50 (DE)**

(74) Vertreter : **Urbach, Hans-Georg, Dr. et al**
**Hanauer Landstrasse 526**
**D-60386 Frankfurt (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die vorliegende Erfindung betrifft wertvolle Monoazofarbstoffe der allgemeinen Formel I

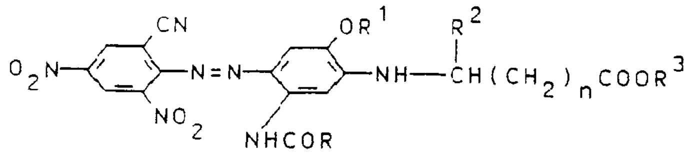

(I)

in der
R Methyl oder Ethyl,
$R^1$ Methyl, Ethyl, Methoxyethyl oder Ethoxyethyl,
$R^2$ Methyl oder Ethyl, wenn n gleich 0 ist, und Wasserstoff, wenn n gleich 1 ist,
$R^3$ Methyl, Ethyl, n-Propyl oder i-Propyl und
n 0 oder 1
bedeuten.

Die Erfindung betrifft auch Mischungen von Farbstoffen der allgemeinen Formel I sowie die Herstellung dieser Farbstoffe und ihrer Mischungen und ihre Verwendung zum Färben von hydrophoben Fasermaterialien.

Bevorzugt sind für R Methyl und für $R^1$ Methyl und Methoxyethyl. Für den Fall, daß n gleich 0 ist, steht $R^2$ bevorzugt für Methyl.

$R^3$ steht bevorzugt für Ethyl, wenn n gleich 1 ist, und für n- oder i-Propyl, wenn n gleich 0 ist. Besonders bevorzugt steht $R^3$ für Methyl, wenn n gleich 1 ist, und für Methyl, Ethyl, n-Propyl oder i-Propyl, wenn n gleich 0 ist.

Bevorzugte Farbstoffe sind solche mit mehreren bevorzugten Resten R, $R^1$, $R^2$, $R^3$ und n. Besonders bevorzugte Farbstoffe sind solche mit bevorzugten Resten R, $R^1$ und $R^2$ und besonders bevorzugten Resten $R^3$.

Den erfindungsgemäßen Farbstoffen der allgemeinen Formel I ähnliche Farbstoffe sind bereits bekannt und in folgenden Patentschriften beschrieben:
DOS 15 44 599, US 3 544 550, US 3 553 190, DP 1 260 654, GB 1 479 644, US 3 558 593 und DP 2 850 994. Aus der EP 122 482 und der DOS 3 724 058 sind Farbstoffe mit Alkoxycarbonylalkylamino-Gruppen in der Kupplungskomponente bekannt, die nach einer thermischen Beanspruchung des gefärbten Substrats, gegebenenfalls im Verlaufe eines Ausrüstungsprozesses eine gute Waschechtheit zeigen. Die Alkoxyreste dieser Farbstoffe sind jedoch sehr lang und haben 8 bis 10 bzw. 8 bis 14 C-Atome.

Es wurde nun überraschenderweise gefunden, daß die erfindungsgemäßen Farbstoffe der allgemeinen Formel I den Farbstoffen des Standes der Technik, insbesondere in den Applikationsechtheiten, wie pH-Empfindlichkeit, Reduktionsempfindlichkeit und Verkochechtheit, überlegen sind und sehr gute Gebrauchsechtheiten, wie Thermofixierechtheit und Wasserechtheit, besitzen. Darüberhinaus wurde gefunden, daß sie eine hervorragende Thermomigrationsechtheit, insbesondere wenn die Färbung einer anschließenden Kunstharzausrüstung unterworfen wurde, besitzen.

Die Herstellung der erfindungsgemäßen Farbstoffe der allgemeinen Formel I erfolgt vorzugsweise dadurch, daß man einen Azofarbstoff der Formel II

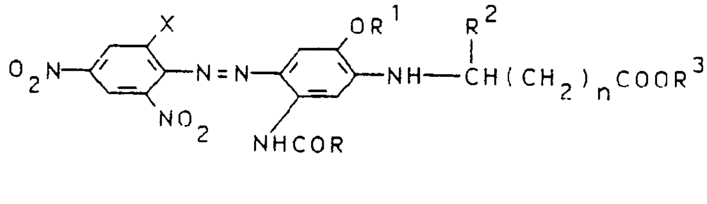

(II)

in der X für Chlor oder vorzugsweise Brom steht und R, $R^1$, $R^2$, $R^3$ und n die oben angegebenen Bedeutungen haben, in an sich bekannter Weise z.B. nach den Angaben der DE-OS 1809920, der DE-OS 1809921, der GB-PS 1184825, der DE-AS 1544563, der DE-OS 2310745, der DE-AS 2456495, der DE-AS 2610675, der DE-OS 2724116, der DE-OS 2724117, der DE-OS 2834137, der DE-OS 2341109, der US-PS 3821195, der DE-OS 2715034 oder der DE-OS 2134896 einer nucleophilen Austauschreaktion unterwirft, wobei als nucleophiles Agenz das Cyanidion $CN^{\ominus}$ eingesetzt wird. Bei dieser Reaktion werden in dem Farbstoff der allgemeinen Formel II für X stehendes Chlor oder Brom gegen CN ausgetauscht.

Die Herstellung der Farbstoffe der allgemeinen Formel II, erfolgt nach dem Fachmann bekannten Verfahren vorzugsweise dadurch, daß man ein Amin der Formel III

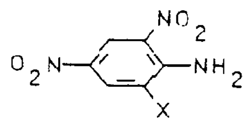

(III)

in der X für Chlor oder Brom steht, diazotiert und auf ein Amin der Formel IV

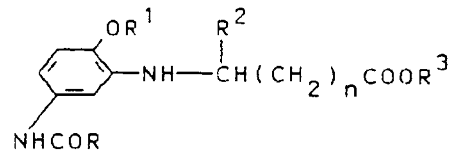

(IV)

in der R, $R^1$, $R^2$, $R^3$ und n die oben angegebenen Bedeutungen haben, kuppelt.

Erfindungsgemäße Farbstoffmischungen enthalten zwei oder mehrere Farbstoffe der allgemeinen Formel I.

In den erfindungsgemäßen Farbstoffmischungen kann das Verhältnis der verschiedenen Farbstoffe der allgemeinen Formel I in relativ weiten Grenzen variieren, und die Farbstoffe können als Kristallmischungen oder ganz oder teilweise in Form von Mischkristallen vorliegen. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70:30 bis 30:70 bevorzugt, d.h. der Gewichtsanteil eines Farbstoffs beträgt 30 bis 70 %.

Die erfindungsgemäßen Farbstoffmischungen können nach verschiedenen Verfahren hergestellt werden, so z.B.:

1. Durch Mischen von mindestens zwei separat hergestellten und formierten Einzelfarbstoffen der allgemeinen Formel I.
2. Durch Mischen der separat hergestellten, nicht formierten Einzelfarbstoffe und gemeinsame Formierung.
3. Durch Mischen der Ausgangsmaterialien der allgemeinen Formeln III und IV oder II und gemeinsame weitere Umsetzung wie oben beschrieben. Wird z.B. bei dem oben beschriebenen Verfahren des Cyanaustausches anstelle eines Einzelfarbstoffs der allgemeinen Formel II eine Mischung von zwei oder mehreren Farbstoffen der allgemeinen Formel II, die sich bezüglich R, $R^1$, $R^2$, $R^3$ und n unterscheiden, eingesetzt, so erhält man die entsprechende Mischung der erfindungsmäßen Farbstoffe der allgemei-Formel I.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2$^1$/2-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen kann in an sich bekannter Weise erfolgen, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 80 bis 230°C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230°C mit HT-Dampf, Druckdampf oder Trockenhitze behandelt wird. Man erhält auf diese Weise sehr farbstarke grünstichig blaue Färbungen und Drucke mit sehr guten Echtheitseigenschaften, insbesondere einer sehr guten Licht,

Thermofixier-, Thermomigrier- und Waschechtheit, sowie einer sehr guten M+S-Echtheit (C4A-Wäsche).

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden. In den bei obigen Applikationen eingesetzten Färbeflotten und Druckpasten sollen die erfindungsgemäßen Farbstoffe bzw. Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat und insbesondere sogenannten "Säurespender" wie z.B. Butyrolacton, Monochloracetamid, Natriumchloracetat, Natriumdichloracetat, Na-Salz der 3-Chlorpropionsäure, Halbester der Schwefelsäure wie z.B. Laurylsulfat, Schwefelsäureester von oxethylierten und oxypropylierten Alkoholen wie z.B. Butylglykolsulfat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel und die oben genannten "Säurespender".

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise von 4,5, eingestellt. Es ist vorteilhaft, den eingestellten pH-Wert abzupuffern und eine ausreichende Menge eines Puffersystems zuzusetzen. Ein vorteilhaftes Puffersystem ist z.B. das System Essigsäure/Natriumacetat.

Soll der Farbstoff oder die Farbstoffmischung für den Textildruck herangezogen werden, so werden die erforderlichen Mengen der Farbstoffeinstellungen in an sich bekannter Weise zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele näher erläutert. Prozentangaben sind Gewichtsprozente.

<u>Beispiel 1</u>

In eine Suspension aus 100 ml Dimethylsulfoxid, 2,1 g Natriumcyanid und 7,1 g Kupfer-I-cyanid werden bei 70 bis 75°C 59,1 g des Farbstoffs der Formel

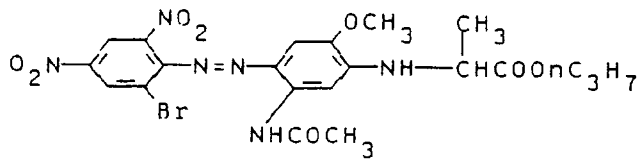

eingetragen und 30 min bei dieser Temperatur gerührt. Dann wird die Temperatur 30 min auf 110°C angehoben und der Ansatz anschließened langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so 38,5 g des Farbstoffs der Formel

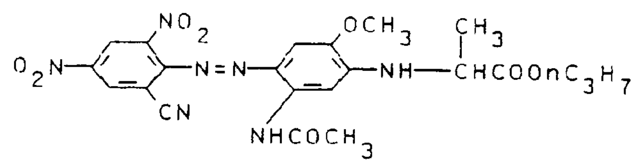

der bei 615 nm sein Absorptionsmaximum hat und sich in o-Dichlorbenzol mit blauer Farbe löst.

0,6 g des so erhaltenen Farbstoffs werden in feindispergierter Form in 2000 g Wasser eingerührt. Die Dispersion wird mit Essigsäure und Natriumacetat auf einen pH-Wert 4,5 eingestellt und mit 2,0 g eines handelsüblichen Dispergiermittels auf Basis eines Naphthalinsulfonsäure-Formaldehyd-Kondensats versetzt.

In die so erhaltene Färbeflotte bringt man 100 g eines Polyestergewebes auf Basis von Polyethylenglykolterephthalats ein und färbt 1 h bei 130°C.

Nach anschließendem Spülen, reduktiver Nachbehandlung mit einer 0,2%igen Natriumdithionitlösung während 15 min bei 70 bis 80°C, Spülen und Trocknen erhält man eine farbstarke blaue Färbung mit sehr guten coloristischen Eigenschaften, insbesondere sehr guter Thermofixier-, Thermomigrier-und Waschechtheit.

Beispiel 2

Ersetzt man die 59,1 g des bromhaltigen Farbstoffs in Beispiel 1 durch 55,3 g des Farbstoffs der Formel

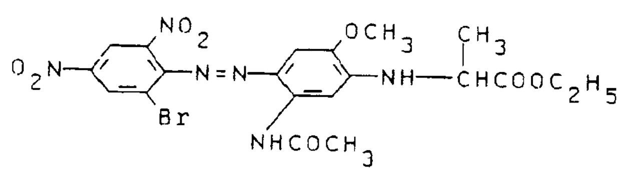

und verfährt weiter wie in Beispiel 1 angegeben, so erhält man 37 g des Farbstoffs der Formel

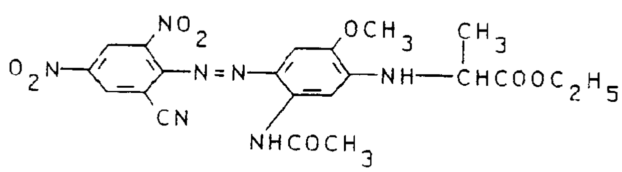

der sich in o-Dichlorbenzol ebenfalls mit blauer Farbe löst und bei 616 nm sein Absorptionsmaximum hat.

20,0 g des so erhaltenen Farbstoffs werden in feiner Verteilung einer Druckpaste, die 45,0 g Johannisbrotkernmehl, 6,0 g 3-nitrobenzolsulfonsaures Natrium und 3,0 g Zitronensäure auf 100 g enthält, einverleibt. Wird Polyester mit dieser Druckpaste bedruckt, das bedruckte Gewebe nach dem Trocknen 15 min bei 1,5 atü Dampfdruck gedämpft, geseift, erneut gespült und getrocknet, so erhält man einen farbstarken blauen Druck von sehr guten coloristischen Eigenschaften.

Beispiel 3

53,9 g des Farbstoffs der Formel

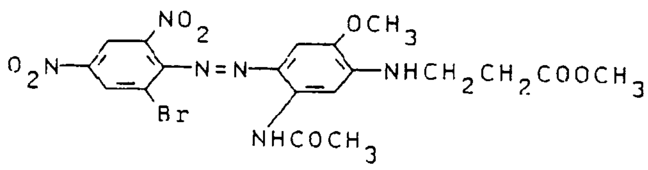

werden analog zu den Angaben im Beispiel zu dem Farbstoff der Formel

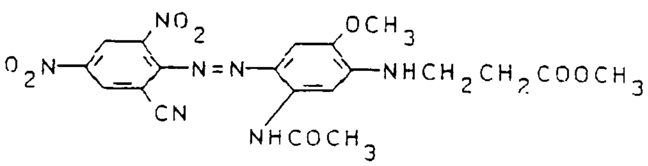

umgesetzt. Man erhält so 41,2 g des Farbstoffs, der bei 621 nm sein Absorptionsmaximum hat und sich in o-Dichlorbenzol mit blauer Farbe löst.

Den Angaben in Beispiel 1 entsprechend wird mit 0,6 g dieses Farbstoffs in feindispergierter Form eine Färbeflotte zubereitet und darin während 45 min bei 130°C 100 g eines Polyester-Zellulose-Mischgewebes (70 : 30) gefärbt. Nach anschließendem Spülen, reduktiver Nachbehandlung mit einer 0,2%igen Natriumdithionitlösung während 15 min bei 70 bis 80°C, Spülen und Trocknen wird das Gewebe mit einer Klotzflotte geklotzt, die 40 g/l eines Reaktantharzes, 20 g/l eines Melaminharzes, 20 g/l einer Polyethylen-Emulsion und 20 g/l eines Weichmachers und 8 g/l eines Katalysators enthält. Die geklotzte Färbung wird anschließend 1 Minute bei 100°C getrocknet und 20 sec bei 180°C kondensiert. Die so ausgerüstete Färbung wird einer Waschechtheitsprüfung bei 60°C in Gegenwart einer ECE-Detergens unterzogen. Das der Gewebeprobe dabei beigefügte Mehrfaserband zeigt praktisch keine Anschmutzung.

In der nachstehenden Tabelle 1 sind weitere erfindungsgemäße Farbstoffe angegeben, die auf Polyestermaterialien ebenfalls farbstarke blaue Färbungen bzw. Drucke mit ebenfalls sehr guten coloristischen Eigenschaften liefern.

TABELLE 1

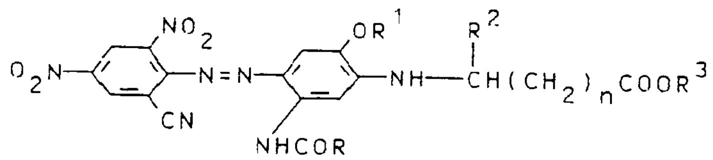

(I)

| Bsp. | R | $R^1$ | $R^2$ | $R^3$ | n |
|---|---|---|---|---|---|
| 4 | $CH_3$ | $CH_3$ | $CH_3$ | $CH_3$ | 0 |
| 5 | $CH_3$ | $CH_3$ | $CH_3$ | $iC_3H_7$ | 0 |
| 6 | $CH_3$ | $C_2H_5$ | $CH_3$ | $CH_3$ | 0 |
| 7 | $CH_3$ | $C_2H_5$ | $CH_3$ | $C_2H_5$ | 0 |
| 8 | $CH_3$ | $C_2H_5$ | $CH_3$ | $nC_3H_7$ | 0 |
| 9 | $C_2H_5$ | $CH_3$ | $CH_3$ | $CH_3$ | 0 |
| 10 | $C_2H_5$ | $CH_3$ | $CH_3$ | $C_2H_5$ | 0 |
| 11 | $C_2H_5$ | $CH_3$ | $CH_3$ | $iC_3H_7$ | 0 |
| 12 | $CH_3$ | $(CH_2)_2OCH_3$ | $CH_3$ | $CH_3$ | 0 |
| 13 | $CH_3$ | $(CH_2)_2OCH_3$ | $CH_3$ | $C_2H_5$ | 0 |
| 14 | $CH_3$ | $(CH_2)_2OCH_3$ | $CH_3$ | $nC_3H_7$ | 0 |
| 15 | $CH_3$ | $(CH_2)_2OCH_3$ | $CH_3$ | $iC_3H_7$ | 0 |
| 16 | $CH_3$ | $(CH_2)_2OC_2H_5$ | $CH_3$ | $C_2H_5$ | 0 |
| 17 | $CH_3$ | $(CH_2)_2OC_2H_5$ | $CH_3$ | $CH_3$ | 0 |
| 18 | $CH_3$ | $(CH_2)_2OC_2H_5$ | $CH_3$ | $nC_3H_7$ | 0 |
| 19 | $C_2H_5$ | $(CH_2)_2OCH_3$ | $CH_3$ | $CH_3$ | 0 |
| 20 | $C_2H_5$ | $(CH_2)_2OCH_3$ | $CH_3$ | $C_2H_5$ | 0 |
| 21 | $C_2H_5$ | $(CH_2)_2OCH_3$ | $CH_3$ | $nC_3H_7$ | 0 |
| 22 | $C_2H_5$ | $(CH_2)_2OCH_3$ | $CH_3$ | $iC_3H_7$ | 0 |
| 23 | $C_2H_5$ | $(CH_2)_2OC_2H_5$ | $CH_3$ | $CH_3$ | 0 |
| 24 | $C_2H_5$ | $(CH_2)_2OC_2H_5$ | $CH_3$ | $C_2H_5$ | 0 |
| 25 | $C_2H_5$ | $C_2H_5$ | $CH_3$ | $CH_3$ | 0 |
| 26 | $C_2H_5$ | $C_2H_5$ | $CH_3$ | $C_2H_5$ | 0 |
| 27 | $CH_3$ | $CH_3$ | H | $C_2H_5$ | 1 |
| 28 | $CH_3$ | $CH_3$ | H | $nC_3H_7$ | 1 |
| 29 | $CH_3$ | $C_2H_5$ | H | $CH_3$ | 1 |
| 30 | $CH_3$ | $C_2H_5$ | H | $C_2H_5$ | 1 |
| 31 | $C_2H_5$ | $CH_3$ | H | $CH_3$ | 1 |
| 32 | $C_2H_5$ | $CH_3$ | H | $C_2H_5$ | 1 |

| Bsp. | R | $R^1$ | $R^2$ | $R^3$ | n |
|---|---|---|---|---|---|
| 33 | $CH_3$ | $(CH_2)_2OCH_3$ | H | $CH_3$ | 1 |
| 34 | $CH_3$ | $(CH_2)_2OCH_3$ | H | $C_2H_5$ | 1 |
| 35 | $CH_3$ | $(CH_2)_2OCH_3$ | H | $iC_3H_7$ | 1 |
| 36 | $CH_3$ | $(CH_2)_2OC_2H_5$ | H | $C_2H_5$ | 1 |
| 37 | $CH_3$ | $(CH_2)_2OC_2H_5$ | H | $CH_3$ | 1 |
| 38 | $C_2H_5$ | $C_2H_5$ | H | $C_2H_5$ | 1 |
| 39 | $C_2H_5$ | $(CH_2)_2OCH_3$ | H | $CH_3$ | 1 |
| 40 | $C_2H_5$ | $(CH_2)_2OCH_3$ | H | $C_2H_5$ | 1 |
| 41 | $C_2H_5$ | $(CH_2)_2OCH_3$ | H | $iC_3H_7$ | 1 |
| 42 | $C_2H_5$ | $(CH_2)_2OC_2H_5$ | H | $CH_3$ | 1 |
| 43 | $CH_3$ | $CH_3$ | H | $CH_3$ | 0 |
| 44 | $CH_3$ | $CH_3$ | H | $C_2H_5$ | 0 |
| 45 | $CH_3$ | $CH_3$ | H | $nC_3H_7$ | 0 |
| 46 | $CH_3$ | $C_2H_5$ | H | $CH_3$ | 0 |
| 47 | $CH_3$ | $C_2H_5$ | H | $C_2H_5$ | 0 |
| 48 | $CH_3$ | $C_2H_5$ | H | $iC_3H_7$ | 0 |
| 49 | $CH_3$ | $(CH_2)_2OCH_3$ | H | $CH_3$ | 0 |
| 50 | $CH_3$ | $(CH_2)_2OCH_3$ | H | $C_2H_5$ | 0 |
| 51 | $CH_3$ | $(CH_2)_2OC_2H_5$ | H | $C_2H_5$ | 0 |
| 52 | $C_2H_5$ | $CH_3$ | H | $CH_3$ | 0 |
| 53 | $C_2H_5$ | $CH_3$ | H | $nC_3H_7$ | 0 |
| 54 | $C_2H_5$ | $CH_3$ | H | $iC_3H_7$ | 0 |
| 55 | $C_2H_5$ | $C_2H_5$ | H | $CH_3$ | 0 |
| 56 | $C_2H_5$ | $(CH_2)_2OCH_3$ | H | $CH_3$ | 0 |
| 57 | $C_2H_5$ | $(CH_2)_2OCH_3$ | H | $C_2H_5$ | 0 |
| 58 | $C_2H_5$ | $(CH_2)_2OCH_3$ | H | $iC_3H_7$ | 0 |
| 59 | $C_2H_5$ | $(CH_2)_2OC_2H_5$ | H | $CH_3$ | 0 |
| 60 | $C_2H_5$ | $(CH_2)_2OC_2H_5$ | H | $C_2H_5$ | 0 |
| 61 | $CH_3$ | $CH_3$ | $C_2H_5$ | $CH_3$ | 0 |
| 62 | $CH_3$ | $CH_3$ | $C_2H_5$ | $C_2H_5$ | 0 |
| 63 | $CH_3$ | $CH_3$ | $C_2H_5$ | $nC_3H_7$ | 0 |
| 64 | $C_2H_5$ | $CH_3$ | $C_2H_5$ | $C_2H_5$ | 0 |
| 65 | $CH_3$ | $C_2H_5$ | $C_2H_5$ | $C_2H_5$ | 0 |
| 66 | $CH_3$ | $(CH_2)_2OCH_3$ | $C_2H_5$ | $C_2H_5$ | 0 |
| 67 | $C_2H_5$ | $(CH_2)_2OCH_3$ | $C_2H_5$ | $CH_3$ | 0 |

In der nachfolgenden Tabelle 2 sind erfindungsgemäße Farbmischungen angegeben.

TABELLE 2

| Bsp. | R | $R^1$ | $R^2$ | $R^3$ | n | Mischungsanteil |
|---|---|---|---|---|---|---|
| 68 | $CH_3$ | $CH_3$ | H | $CH_3$ | 1 | 50 % |
| | $C_2H_5$ | $CH_3$ | H | $CH_3$ | 1 | 50 % |
| 69 | $CH_3$ | $CH_3$ | H | $CH_3$ | 1 | 70 % |
| | $CH_3$ | $CH_3$ | H | $C_2H_5$ | 1 | 30 % |
| 70 | $CH_3$ | $CH_3$ | H | $C_2H_5$ | 1 | 60 % |
| | $CH_3$ | $C_2H_5$ | H | $CH_3$ | 1 | 40 % |
| 71 | $CH_3$ | $CH_3$ | H | $C_2H_5$ | 1 | 55 % |
| | $CH_3$ | $CH_3$ | $CH_3$ | $C_2H_5$ | 0 | 45 % |
| 72 | $CH_3$ | $(CH_2)_2OCH_3$ | H | $CH_3$ | 1 | 10 % |
| | $CH_3$ | $CH_3$ | $CH_3$ | $nC_3H_7$ | 1 | 90 % |
| 73 | $C_2H_5$ | $CH_3$ | $CH_3$ | $nC_3H_7$ | 0 | 80 % |
| | $C_2H_5$ | $CH_3$ | $CH_3$ | $iC_3H_7$ | 0 | 20 % |
| 74 | $CH_3$ | $CH_3$ | $CH_3$ | $iC_3H_7$ | 0 | 40 % |
| | $C_2H_5$ | $CH_3$ | $CH_3$ | $C_2H_5$ | 0 | 60 % |
| 75 | $CH_3$ | $CH_3$ | H | $C_2H_5$ | 1 | 25 % |
| | $CH_3$ | $C_2H_5$ | H | $CH_3$ | 1 | 25 % |
| | $CH_3$ | $CH_3$ | $CH_3$ | $CH_3$ | 0 | 50 % |
| 76 | $CH_3$ | $CH_3$ | $CH_3$ | $iC_3H_7$ | 0 | 95 % |
| | $CH_3$ | $C_2H_5$ | $CH_3$ | $C_2H_5$ | 0 | 5 % |

## Patentansprüche

1. Azofarbstoff der allgemeinen Formel I

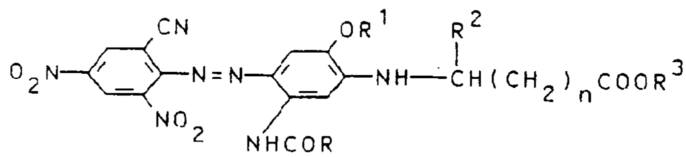

(I)

in der
R Methyl oder Ethyl,
$R^1$ Methyl, Ethyl, Methoxyethyl oder Ethoxyethyl,
$R^2$ Methyl oder Ethyl, wenn n gleich 0 ist, und Wasserstoff, wenn n gleich 1 ist,
$R^3$ Methyl, Ethyl, n-Propyl oder i-Propyl und
n 0 oder 1
bedeuten.

2. Azofarbstoff nach Anspruch 1, dadurch gekennzeichnet, daß R Methyl ist.

3. Azofarbstoff nach Anspruch 1 und/oder 2, dadurch gekennzeichnet, daß $R^1$ Methyl oder Methoxyethyl ist.

4. Azofarbstoff nach einem oder mehreren der Ansprüche 1 bis 3, dadurch gekennzeichnet, daß $R^2$ Methyl bedeutet, wenn n gleich 0 ist.

5. Azofarbstoff nach einem oder mehreren der Ansprüche 1 bis 4, dadurch gekennzeichnet, daß $R^3$ für Methyl steht, wenn n gleich 1 ist und für Methyl, Ethyl, n-Propyl oder i-Propyl, wenn n gleich 0 ist.

6. Farbstoffmischung, dadurch gekennzeichnet, daß sie einen oder mehrere Azofarbstoffe der allgemeinen Formel I des Anspruchs 1 enthält.

7. Farbstoffmischung nach Anspruch 6, dadurch gekennzeichnet, daß der Gewichtsanteil einer Komponente gemäß der allgemeinen Formel I des Anspruchs 1 10 bis 90 %, bevorzugt 30 bis 70 %, beträgt.

8. Verfahren zur Herstellung eines Azofarbstoffes der allgemeinen Formel I, dadurch gekennzeichnet, daß man einen Azofarbstoff der allgemeinen Formel II

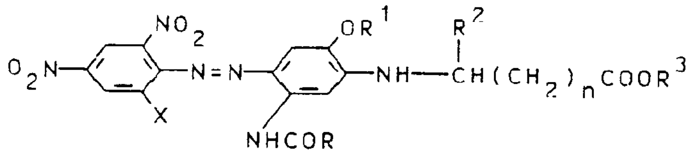 (II)

in der X für Chlor oder vorzugsweise Brom steht und R, $R^1$, $R^2$, $R^3$ und n wie in Anspruch 1 angegeben definiert sind, einer nucleophilen Austauschreaktion unterwirft, wobei als nucleophiles Agens des Cyanidions $CN^{\ominus}$ eingesetzt wird.

9. Verwendung der Azofarbstoffe der allgemeinen Formel I des Anspruchs 1 oder deren Mischungen gemäß Anspruch 6 zum Färben und Bedrucken von hydrophoben Fasermaterialien und Mischungen dieser Fasermaterialien mit natürlichen Fasermaterialien.

## Claims

1. Azo dye of the general formula I

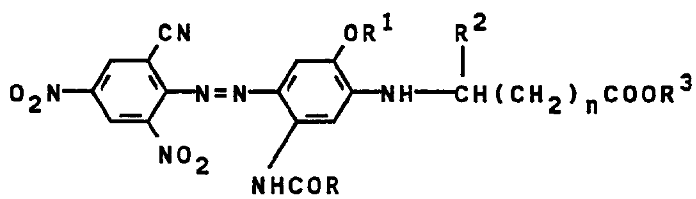 (I)

in which
R is methyl or ethyl, $R^1$ is methyl, ethyl, methoxyethyl or ethoxyethyl,
$R^2$ is methyl or ethyl, if n is equal to 0, and hydrogen, if n is equal to 1,
$R^3$ is methyl, ethyl, n-propyl or i-propyl and
n is 0 or 1.

2. Azo dye according to Claim 1, characterised in that R is methyl.

3. Azo dye according to Claim 1 and/or 2, characterised in that $R^1$ is methyl or methoxyethyl.

4. Azo dye according to one or more of Claims 1 to 3, characterised in that $R^2$ is methyl, if n is equal to 0.

5. Azo dye according to one or more of Claims 1 to 4, characterised in that $R^3$ represents methyl, if n is equal to 1, and methyl, ethyl, n-propyl or i-propyl, if n is equal to 0.

6. Dye mixture, characterised in that it contains one or more azo dyes of the general formula I of Claim 1.

7. Dye mixture according to Claim 6, characterised in that the weight proportion of one component according to the general formula I of Claim 1 is 10 to 90 %, preferably 30 to 70 %.

8. Process for the preparation of an azo dye of the general formula I, characterised in that an azo dye of the general formula II

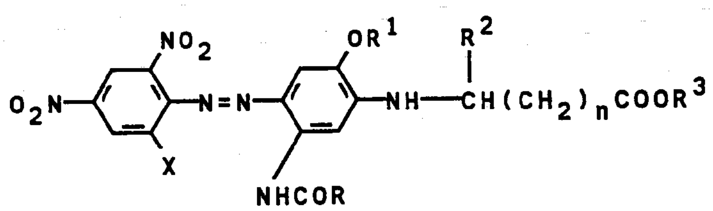

(II)

in which X is chlorine or preferably bromine and R, $R^1$, $R^2$, $R^3$ and n are each as defined in Claim 1, is subjected to a nucleophilic displacement reaction in which the cyanide ion $CN^\ominus$ is used as the nucleophile.

9. Use of the azo dyes of the general formula I of Claim 1 or mixtures thereof according to Claim 6 for the dyeing and printing of hydrophobic fibre materials and mixtures of these fibre materials with natural fibre materials.

**Revendications**

1. Colorant azoïque de formule générale 1

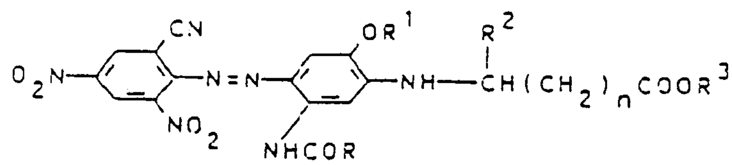

(I)

dans laquelle
R représente un groupe méthyle ou éthyle,
$R^1$ représente un groupe méthyle, éthyle, méthoxyéthyle ou éthoxyéthyle,
$R^2$ représente un groupe méthyle ou éthyle, lorsque n est nul et représente un atome d'hydrogène lorsque n vaut 1,
$R^3$ représente un groupe méthyle, éthyle, n-propyle ou isopropyle, et
n vaut 0 ou 1.

2. Colorant azoïque selon la revendication 1, caractérisé en ce que R représente un groupe méthyle.

3. Colorant azoïque selon la revendication 1 et/ou 2, caractérisé en ce que $R^1$ représente un groupe méthyle ou méthoxyéthyle.

4. Colorant selon une ou plusieurs des revendications 1 à 3, caractérisé en ce que $R^2$ représente un groupe méthyle lorsque n est nul.

5. Colorant azoïque selon une ou plusieurs des revendications 1 à 4, caractérisé en ce que $R^1$ représente un groupe méthyle lorsque n vaut 1 et représente un groupe méthyle, éthyle, n-propyle ou isopropyle lorsque n est nul.

6. Mélange de colorants, caractérisé en ce qu'il contient un ou plusieurs colorants azoïques de formule générale I selon la revendication 1.

7. Mélange de colorants selon la revendication 6, caractérisé en ce que la proportion pondérale d'un constituant répondant à la formule générale I de la revendication 1 vaut 10 à 90 %, avantageusement 30 à 70 %.

8. Procédé pour préparer un colorant azoïque de formule générale I, caractérisé en ce qu'on soumet un colorant azoïque de formule générale II

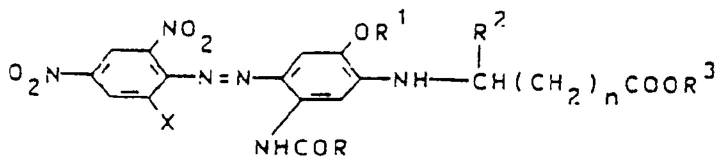 (II)

(dans laquelle X représente un atome de chlore ou avantageusement de brome; et R, $R^1$, $R^2$, $R^3$ et n ont la définition indiquée à la revendication 1) à une réaction d'échange nucléophile, en utilisant comme agent nucléophile l'ion cyanure $CN^-$.

9. Utilisation des colorants azoïques de formule générale I de la revendication 1 ou de leurs mélanges selon la revendication 6 pour teindre et imprimer des matières fibreuses hydrophobes et des mélanges de ces matières fibreuses avec des matières en fibres naturelles.